# EUROPÄISCHE PATENTSCHRIFT

(11) **EP 1 845 319 B1**
(45) Veröffentlichungstag und Bekanntmachung des Hinweises auf die Patenterteilung: **13.01.2016**
(21) Anmeldenummer: 07002149.8
(22) Anmeldetag: 01.02.2007
(51) Int. Cl.: F24J 2/52, E04D 1/30, E04D 13/10, H01L 31/048

(54) **BEFESTIGUNGSANORDNUNG FÜR DIE AUFDACHMONTAGE VON AUF EINEM GENEIGTEN GEBÄUDEDACH MONTIERBAREN DACHZUBEHÖRELEMENTEN**
ATTACHMENT UNIT FOR MOUNTING AUXILIARY ROOF ELEMENTS ON A SLOPING ROOF
DISPOSITIF DE FIXATION POUR LE MONTAGE SUR LE TOIT D'UN ÉLÉMENT D'ACCESSOIRE DE TOIT POUVANT ÊTRE MONTÉ SUR UN TOIT INCLINÉ

(30) Priorität: 02.02.2006 DE 202006001782 U
(43) Veröffentlichungstag der Anmeldung: 17.10.2007
(73) Patentinhaber: Otto Lehmann GmbH, 93073 Neutraubling (DE)
(72) Erfinder: Haimerl, Ludwig, 93173 Wenzenbach (DE)
(74) Vertreter: Benninger, Johannes

(56) Entgegenhaltungen:
- CH-A5- 652 161
- DE-A1- 2 517 457
- DE-A1- 3 345 410
- DE-A1- 4 009 786
- DE-C1- 19 929 078
- DE-U1- 9 109 605
- DE-U1- 20 315 867
- DE-U1- 29 818 738
- JP-A- H1 068 196
- JP-A- 2000 027 377

## Beschreibung

Die Erfindung betrifft eine Befestigungsanordnung für die Aufdach-Montage von auf einem Geneigten Gebäudedach montierbaren Pachzubehörelementen wie Solarmodule, Solarkollektoren, Photovoltaikmodule oder sonstige Funktionsteile. Die Erfindung betrifft darüber hinaus ein Befestigungssystem für die Aufdach-Montage wenigstens eines Dachzubehörelementes wie eines Solarmoduls o. dgl., das eine Mehrzahl gleichartiger Befestigungsanordnungen umfasst.

Die Montage von Solarmodulen und Solarkollektoren zur Wärmegewinnung aus solarer Strahlungsenergie oder von Photovoltaikmodulen zur Gewinnung elektrischer Energie oder auch von anderen Dachzubehörelementen auf geneigten Dachflächen von Gebäuden erfolgt üblicherweise mittels spezieller Stützelemente in Form von mehrfach abgewinkelten Hakenelementen, die nachträglich am Trägerbauteilen einer Dachunterkonstruktion des Gebäudedaches montiert werden. Zur Montage dieser Hakenelemente müssen einzelne Dachpfannen abgenommen und Aussparungen angebracht werden. Nach dem Verschrauben der Stützelemente an den Sparren bzw. Dachlatten werden die Dachpfannen wieder aufgelegt.

Ein derartiges Dachmontagesystem für Solarmodule geht beispielsweise aus der DE 20 2004 019952 U1 hervor. Das Dachmontagesystem umfasst eine Befestigungsklammer, die mit einem Ende an einem Dachsparren befestigt und an deren anderem Ende ein Solarmodul befestigt werden kann. Das Mittelstück zwischen diesen beiden Enden ist C-förmig gebogen und verläuft zwischen einer unteren Kante einer ersten Dachpfanne und einer oberen Kante einer darunter angeordneten benachbarten Dachpfanne.

Eine ähnliches Befestigungssystem ist in der DE 203 07 139 U1 beschrieben, bei dem das am Dach befestigte Ende der metallenen Befestigungsklammer an zwei benachbarten Dachsparren verankert ist.

Zudem offenbart die CH 652 161 A5 ein Dacheindeckungselement für eine Sonnenkollektorbefestigung. Hierbei wird eine Halterung auf einen Dachziegel geschraubt. Der Dachziegel ist über einen Dachhaken mit einer Dachlatte verschraubt.

Die DE 199 29 078 C1 zeigt eine Vorrichtung zur Halterung einer Solarzelle auf einem Dachsteinziegel aus Beton. Die Vorrichtung beinhaltet ein Traglastmodul, eine Konsole und einen Dachsteinziegel. Zur Befestigung an einer Dachlatte ist das Traglastmodul mit Löchern versehen. Weiter ist ein Winkel vorhanden, welcher die Dachlatte untergreift.

Die DE 203 15 867 U zeigt eine Befestigungsvorrichtung für ein Dachelement. Die Befestigungsvorrichtung beinhaltet einen Blechdachstein, einen Montagewinkel und eine Führungsschiene, welche fest miteinander verbunden sind. Die Führungsschiene ist über eine Nut-Feder-Verbindung in einer Gewindestange geführt. Die Verbindung zur Dachunterkonstruktion erfolgt über ein Auflager.

Aus der DE 40 09 786 A1 ist ein Tragdachstein bekannt, welcher über eine Halterung mit einer Dachlatte verbunden ist. Weiter ist eine Konsole auf dem Tragdachstein angeordnet.

Die JP H10 68196 A beschreibt eine S-förmige Montageklammer, deren in Firstrichtung gelegener, oberer Schenkel an einem Dachsparren festgelegt ist und deren unterer Schenkel auf einer Dachpfanne zu liegen kommt. Der untere Schenkel ist dabei in einem Teilbereich mit nach unten offener Nut U-förmig nach oben gebogen und weist im gebogenen, von der Dachpfanne beabstandeten Bereich eine Öffnung zur Aufnahme von Schrauben auf, welche die Befestigung von in First-Traufrichtung laufenden Halteelementen erlauben.

Weitere Befestigungssysteme mit C-förmigen bzw. mit S-förmigen Montageklammern, die zwischen in Falllinie benachbarten Dachpfannen hindurch führen und an Dachsparren verankert sind, gehen zudem aus der DE 101 52 354 C1 sowie aus der DE 10 2004 012 412 A1 hervor.

Darüber hinaus geht aus der DE 91 09 605 U1 ein aus mehreren verschieden gebogenen und ineinander verschiebbaren Haken und Schienenelementen bestehendes Montagegerüst zur Befestigung von Solarmodulen hervor, welches die horizontale Verschiebung der an den Schienen befestigten Module erlaubt.

Diese bekannten Befestigungsmethoden erfordern einen nicht unerheblichen Zeitaufwand zur Montage, da größere Teile des Dachs abgedeckt, einzelne Dachpfannen bearbeitet, die Befestigungshaken einzeln verschraubt und anschließend die Dachpfannen wieder aufgebracht werden müssen. Nach der Montage der Befestigungshaken ragen die Stützelemente durch die Dachfläche hindurch, auf welchen die entsprechenden Solarmodule abgelegt und befestigt werden können, so dass sie ausreichend abgestützt und gesichert sind. Die nicht unerhebliche Gewichtsbelastung kann jedoch nach längerer Betriebsdauer zu Dauerhaltbarkeitsproblemen führen, da Abschnitte der Befestigungshaken auf den Oberkanten von einzelnen Dachpfannen aufliegen und sich dort abstützen. Nach einiger Zeit kann dies zu unzulässig hohen Belastungen und unter ungünstigen Umständen auch zu Brüchen der relativ spröden Dachpfannen führen.

Eine Halterung für Dachzubehörelemente wie bspw. von Schneefanggittern o. dgl. ist schließlich aus der DE 203 00 503 U1 bekannt. Diese bekannte Halterung weist ein oberes Befestigungsteil auf, das hakenförmig ausgebildet ist und ein Kopfende eines Dachdeckungselementes sowie eine das Dachdeckungselement tragende Dachunterkonstruktion übergreift und unterhalb der Dachunterkonstruktion in einen Längsschenkel ausläuft. Dieser Längsschenkel weist ein Sicherungselement auf, das sich kraft- und/oder formschlüssig gegen die Dachunterkonstruktion legt.

Ein Ziel der vorliegenden Erfindung besteht darin, eine einfach montierbare Befestigungsanordnung bzw. ein einfach montierbares Befestigungselement für Dachzubehörelemente zur Verfügung zu stellen, das hohen Belastungen standhalten kann und das für eine kostengünstige Nachrüstung bestehender Dachkonstruktionen geeignet ist.

Dieses Ziel der Erfindung wird mit dem Gegenstand des unabhängigen Anspruchs erreicht. Merkmale vorteilhafter Weiterbildungen ergeben sich aus den abhängigen Ansprüchen.

Eine erfindungsgemäße Befestigungsanordnung mit den Merkmalen des unabhängigen Anspruchs 1 dient zur Aufdach-Montage von auf einem geneigten Gebäudedach montierbaren Dachzubehörelementen wie Solarmodule, Solarkollektoren, Fotovoltaikmodule oder sonstige Funktionsteile. Die Befestigungsanordnung umfasst zumindest ein Dacheindeckungselement, ein an dessen äußerer Oberfläche befestigtes Montageelement sowie ein an der Unterseite des Dacheindeckungselementes befestigtes Stützelement zur Verbindung mit einem Trägerbauteil einer Dachunterkonstruktion. Ein Dacheindeckungselement kann insbesondere eine Dachpfanne aus Metall oder Kunststoff oder aus einem anderen geeigneten Werkstoff sein, die an vorhandene Dacheindeckungselemente aus Ziegel, Beton oder Stein angepasst und zu diesen kompatibel ist. Das erfindungsgemäße Dacheindeckungselement kann somit auf einfache Weise gegen eine vorhandene Dachpfanne ausgetauscht und als Befestigungselement für ein Solarmodul oder ein anderes Dachzubehörelement dienen.

Wenn im vorliegenden Zusammenhang von einem Montageelement sowie von einem Stützelement die Rede ist, so ist mit dem Montageelement ein auf der äußeren Oberfläche des Dacheindeckungselements bzw. der Dachpfanne befestigtes Metall- oder Kunststoffteil gemeint, auf dem das flächige Solarmodul aufliegt bzw. an dem es befestigt wird. Mit Stützelement ist ein an der Unterseite des Dacheindeckungselements befestigtes Metall- oder Kunststoffteil gemeint, das zur Verankerung des Dacheindeckungselements an der Dachunterkonstruktion dient.

Das Trägerbauteil der Dachunterkonstruktion kann insbesondere ein in First-Traufrichtung des Dachs verlaufender Dachsparren o. dgl. sein, die einen wesentlichen Teil der Dachlast aufnimmt und in die Gebäudewände einleitet. Üblicherweise sind an den Dachsparren in regelmäßigen Abständen quer verlaufende Dachlatten befestigt. An jeweils einer Kreuzungsstelle einer solchen Dachlatte mit einem tragenden Dachsparren kann das Dacheindeckungselement (Dachpfanne aus Metall o. dgl.) verankert und rutschsicher befestigt werden.

Die erfindungsgemäße Befestigungsanordnung ermöglicht eine erhebliche Zeit- und Kostenersparnis bei der Montage von Solarmodulen auf der Oberfläche von Gebäudedächern, da die dort üblicherweise verwendeten Dachpfannen auf einfache Weise gegen erfindungsgemäße Dacheindeckungselemente ausgetauscht werden können, die in integrierter Form zum Einen die sichere Verankerung an der Dachunterkonstruktion sowie zum Anderen die Ständerelemente zur Montage der Solarmodule beinhalten. Neben der kostengünstigen Montagemöglichkeit gewährleisten die erfindungsgemäßen Dacheindeckungselemente eine Betriebs- und Funktionssicherheit über eine sehr lange Betriebsdauer, die der Lebensdauer einer herkömmlichen Dachpfanne mindestens gleichkommt. Da herkömmliche Dachpfannen aus Ziegel normalerweise für eine typische Lebensdauer von ca. 25 Jahren ausgelegt sind, wird deutlich, dass die erfindungsgemäßen Dacheindeckungselemente diese Lebensdauer bei weitem übersteigen. Die aus dem Stand der Technik bekannten und bisher üblicherweise verwendeten Montagebügel entfallen, über die eine erhebliche Druckbelastung auf die Dachpfannen des Gebäudedachs eingeleitet wurde, so dass diese nach länger dauerndem Betrieb, unter großer Schneelast oder unter größerem Winddruck teilweise brechen konnten. Diese Bruchgefahr entfällt bei der erfindungsgemäßen Befestigungsanordnung vollständig.

Gemäß der Erfindung weist die Befestigungsanordnung eine Verstärkungsschiene auf, die zwischen dem Stützelement des Dacheindeckungselementes und dem Trägerbauteil der Dachunterkonstruktion anordenbar ist. Diese Verstärkungsschiene ist mit dem entsprechenden Trägerbauteil der Dachunterkonstruktion verbindbar, insbesondere verschraubbar. Um das auf dem Gebäudedach montierte Dacheindeckungselement sicher zu befestigen, wird dieses bei auf der Verstärkungsschiene aufliegendem Stützelement mit der Verstärkungsschiene und mit dem Trägerbauteil der Dachunterkonstruktion verschraubt. Die Verstärkungsschiene nimmt Querkräfte auf, die ansonsten über das Stützelement und das damit verbundene Dacheindeckungselement auf das Trägerbauteil der Dachunterkonstruktion einwirken würde und dies je nach gegebenen Belastungsverhältnissen ggf. überlasten könnte.

Die Verstärkungsschiene umkleidet dieses Trägerbauteil und sorgt für eine bessere Verteilung der auftretenden Belastungskräfte, insbesondere der Biegebelastungen. In erster Linie dient die Verstärkungsschiene jedoch zur Übertragung der über das Halteelement und das Stützelement aufgenommenen und in das Dach einzuleitenden Lasten auf das Trägerbauteil, das insbesondere ein Dachsparren sein kann. Diese Kräfte werden dadurch besonders effektiv aufgenommen, indem eine Verspannung der Verstärkungsschiene mit dem Dachsparren erfolgt mittels einer durchgängigen Verschraubung, welche auch die auf dem Sparren aufliegende Dachlatte durchdringt. Ein Nebenaspekt dieser Montage besteht darin, dass die von der Schiene teilweise verkleidete Dachlatte, auf der die Schiene montiert ist, ebenfalls vor unzulässig hohen Biegebelastungen bewahrt wird.

Das Dacheindeckungselement sowie die Verstärkungsschiene können jeweils aus Metallblech gefertigt sein, wobei sich hierbei insbesondere verzinktes Stahlblech eignet, das über einen Tiefziehvorgang (Dacheindeckungselement) sowie einen einfachen Umformvorgang (Verstärkungsschiene) in die gewünschte Kontur gebracht sein kann. Das Montageelement und das Stützelement sind jeweils an gegenüber liegenden Seiten der Oberseite bzw. der Unterseite des Dacheindeckungselements angeordnet und vorzugsweise mittels gemeinsamer Befestigungselemente dort befestigt, insbesondere vernietet, verschraubt und/oder verschweißt. Auf diese Weise wird ein integriertes Bauteil gebildet, das als ganzes auf das Dach aufgelegt und dort verankert, insbesondere verschraubt werden kann, wonach die benachbarten Dacheindeckungselemente wieder an ihrem Platz gefügt und die Solarmodule montiert werden können.

Wahlweise kann das Dacheindeckungselement, das Stützelement und/oder das Montageelement auch ein gemeinsames Bauteil, insbesondere ein einstückiges Bauteil sein, das bspw. aus Leichtmetall gefertigt, insbesondere spritzgegossen sein kann. Als Material hierfür eignet sich bspw. eine Aluminiumlegierung. Die Teile können jedoch auch einstückig aus Kunststoff, insbesondere aus faserverstärktem Kunststoff oder aus Beton o. dgl. gefertigt sein.

Das an der Außenseite des Dacheindeckungselementes angeordnete Montageelement kann insbesondere eine hakenförmige Gestalt zur abstützenden Aufnahme von flächigen Solarmodulen bzw. Kollektoren aufweisen. Die Gestaltung der Verbindungselemente zum Solarmodul richtet sich nach den jeweiligen Anschlussflächen.

Das an der Innenseite des Dacheindeckungselementes angeordnete Stützelement weist vorzugsweise eine stabilisierende Profilierung, insbesondere einen U-förmigen Querschnitt sowie einen hakenförmigen Abschnitt zur abstützenden Anlage am Trägerbauteil der Dachunterkonstruktion bzw. an der Verstärkungsschiene auf. Wahlweise kann das Stützelement auch eine geeignete Längssicke aufweisen, die für die gewünschte Steifigkeit sorgen kann.

Die Verstärkungsschiene weist einen L-förmigen oder einen U-förmigen Querschnitt auf und kann wenigstens eine in Längsrichtung verlaufende Sicke an einem der Schenkel des L-förmigen bzw. U-förmigen Querschnittes aufweisen. Auf diese Weise kann die Verstärkungsschiene den üblicherweise rechteckförmigen Querschnitt des Trägerbauteils der Dachunterkonstruktion - bspw. eine Dachlatte - an zwei oder drei Seiten umkleiden und im Zusammenhang mit der bis zum Dachsparren reichenden Verschraubung für eine optimale Verteilung der auftretenden Gewichtsbelastungen und Übertragung der Lasten auf den Sparren sorgen, so dass das Trägerbauteil - üblicherweise der Dachsparren - bei aufliegendem Dacheindeckungselement und der durch die montierten Solarmodule entstehenden Belastung nicht überlastet werden und ggf. brechen kann.

Die Verstärkungsschiene kann eine Mehrzahl von regelmäßig angeordneten Durchbrüchen zur Schraubmontage des Dacheindeckungselementes am Trägerbauteil der Dachunterkonstruktion aufweisen. Auf diese Weise kann das Dacheindeckungselement in verschiedenen Positionen montiert werden, ohne dass zuvor eine exakte Ausrichtung der Verstärkungsschiene auf dem Trägerbauteil der Dachunterkonstruktion (Dachlatte bzw. Dachsparren) notwendig wäre. Durch eine Mehrzahl von regelmäßig angeordneten Durchbrüchen kann eine Schraubmontage des Dacheindeckungselements in mehreren regelmäßig voneinander beabstandeten Positionen erfolgen, je nachdem wie die benachbarten Dacheindeckungselemente angeordnet sind.

Das Dacheindeckungselement wird nach dem Auflegen auf das Trägerbauteil bzw. auf die darauf angebrachte Verstärkungsschiene mittels wenigstens einer Holzschraube, insbesondere mittels wenigstens einer Senkfräskopfschraube am hölzernen Trägerbauteil der Dachunterkonstruktion des Gebäudedachs befestigt, wobei die wenigstens eine Schraube das Montageelement, das Dacheindeckungselement, das Stützelement sowie die Verstärkungsschiene durchdringt und gegen das Trägerbauteil verspannt. Diese tragenden Bauteile der Dachunterkonstruktion werden üblicherweise durch die parallel angeordneten, in First-Traufrichtung verlaufenden Dachsparren gebildet, an denen die Dacheindeckungselemente mittels der relativ langen Senkfräskopfschrauben verankert sind. Durch Verwendung einer Senkfräskopfschraube kann die Montagezeit deutlich verkürzt werden, da kein Vorbohren in das Holz des Trägerbauteils der Dachunterkonstruktion mehr notwendig ist. Die Senkfräskopfschraube bohrt sich vielmehr ihr eigenes Kernloch selbst und kann nach Andrücken während der ersten Gewindegänge relativ leichtgängig eingedreht werden.

Nach dem Verankern des Dacheindeckungselementes ist dieses auch gegen die oftmals auftretenden Sogkräfte aufgrund einer Unterströmung der in Aufdach-Montage montierten Solarmodule geschützt, so dass die Befestigungsanordnung auch bei derartigen Windkräften nicht vom Dach abgehoben werden kann.

Vorzugsweise weist das Dacheindeckungselement eine die Kontur der umgebenen Dacheindeckungselemente aus Ziegeln, Beton oder anderen Baustoffen nachempfindende Kontur und/oder Oberflächengestaltung und/oder Farbgebung auf. Auf diese Weise kann das erfindungsgemäße Dacheindeckungselement in einfacher Weise gegen die vorhandenen Dachpfannen ausgetauscht werden, ohne dass dies optisch in irgendeiner Weise auffällt. Selbstverständlich kann das Dacheindeckungselement auch ohne Lackierung oder Farbbeschichtung verwendet werden, wenn dies bspw. aus Kostengründen gewünscht ist. Insbesondere bei gewerblich genutzten Gebäuden kann es oftmals völlig ausreichen, wenn die verzinkten Dacheindeckungselemente gegen vorhandene Dachpfannen ausgetauscht werden.

Die Erfindung betrifft weiterhin ein Befestigungssystem für die Aufdach-Montage wenigstens eines Dachzubehörelementes wie eines Solarmoduls o. dgl., das eine Mehrzahl gleichartiger Befestigungsanordnungen gemäß einer der zuvor beschriebenen Ausführungsformen umfasst. Es können auf diese Weise so viele Befestigungsanordnungen verwendet werden wie zur sicheren Montage größerer Flächen von Solarmodulen erforderlich sind. Diese Mehrzahl von regelmäßig angeordneten Befestigungsanordnungen bildet anschließend das erfindungsgemäße Befestigungssystem für die Aufdach-Montage der Solarmodule.

Die Erfindung betrifft weiterhin ein Befestigungselement für die Aufdach-Montage wenigstens eines Dachzubehörelementes, das wenigstens ein Dacheindeckungselement mit daran befestigtem Montageelement gemäß einer der zuvor beschriebenen Ausführungsformen umfasst.

Wenn im vorliegenden Zusammenhang von einem Trägerbauteil des Gebäudedachs bzw. der Dachunterkonstruktion die Rede ist, so ist damit in der Regel ein längs zur Dachneigung, in First-Traufrichtung verlaufender Dachsparren gemeint, der üblicherweise als tragendes Teil des Daches dient (vgl. DIN 1052).

Wenn weiterhin im vorliegenden Zusammenhang meist von einem Solarmodul o. dgl. als Dachzubehörelement die Rede ist, so ist die nicht einschränkend zu verstehen. Das erfindungsgemäße Defestigungssystem kann vielmehr für zahlreiche verschiedene Dachzubehörelemente Verwendung finden, bspw. für Schneefanggitter, Dachsteigtritte oder für andere Elemente.

Erfindungsgemäß ist vorgesehen, dass eine auf den Trägerabschnitt wirkende Zugbelastung über den Befestigungsbügel und die Verstärkungsschiene weitest gehend in das Trägerbauteil der Dachunterkonstruktion einleitbar ist. Die Zugbelastung entsteht zu einem sehr geringen Teil aus dem Eigengewicht des Befestigungselementes. Zum größten Teil wird die Zugkraft aus der Schwerkraft eines belasteten Befestigungactcmcntcs gebildet, bspw, durch eine Schneelast, die auf eine am Befestigungselement fixierte Solarmodulfläche einwirkt.

Das Darheindeckungselement sowie die übrigen Befestigungs- und Verstärkungselemente können insbesondere aus tiefgezogenem und gebogenem Stahlblech gefertigt sein, das ggf. eine Verzinkung und/oder eine Lackierung oder Pulverbeschichtung aufweisen kann. Alternativ hierzu können einzelne Bauteile auch aus spritzgegossenem Leichtmetall, insbesondere aus einer geeigneten Aluminiumlegierung, aus Kunststoff, insbesondere mit Faserverstärkung, oder aus anderen geeigneten Materialien bestehen Auch eine Kombination verschiedener Materialien ist denkbar und kann je nach gewünschten Einsatzzweck sinnvoll sein.

Die Erfindung wird nachfolgend anhand bevorzugter, jedoch nicht einschränkend zu verstehender Ausführungsbeispiele unter Bezugnahme auf die beiliegenden Zeichnungen näher erläutert. Gleiche Teile sind dabei grundsätzlich mit gleichen Bezugszeichen versehen; teilweise wird daher auf eine mehrfache Erläuterung verzichtet.
Fig. 1 zeigt in einer schematischen Perspektivdarstellung eine erfindungsgemäße Befestigungsanordnung zur Aufdach-Montage von Solarmodulen auf einem geneigten Gebäudedach.
Fig. 2 zeigt ein auf dem Gebäudedach aufliegende Rückseite eines erfindungsgemäßen Dacheindeckungselementes in schematischer Perspektivdarstellung.
Fig. 3 zeigt eine schematische Perspektivdarstellung einer Verstärkungsschiene, die Teil der erfindungsgemäßen Befestigungsanordnung ist.
Fig. 4 zeigt eine schematische Draufsicht auf die erfindungsgemäße Befestigungsanordnung.
Fig. 5 zeigt eine schematische Schnittansicht entlang der Schnittlinie V-V der Fig. 4.
Fig. 6 zeigt eine weitere schematische Schnittansicht entlang der Schnittlinie VI-VI der Fig. 4.
Fig. 7 zeigt eine weitere schematische Draufsicht auf die am Dach montierte Befestigungaanordnung.
Fig. 8 zeigt eine Rückseite der erfindungsgemäßen Befestigungsanordnung in schematischer Perspektivdarstellung.

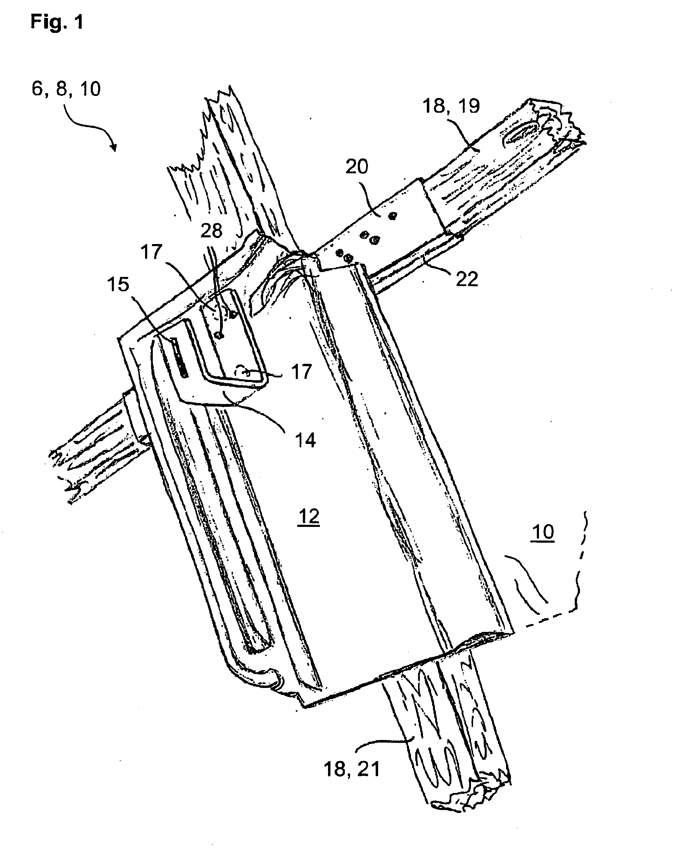

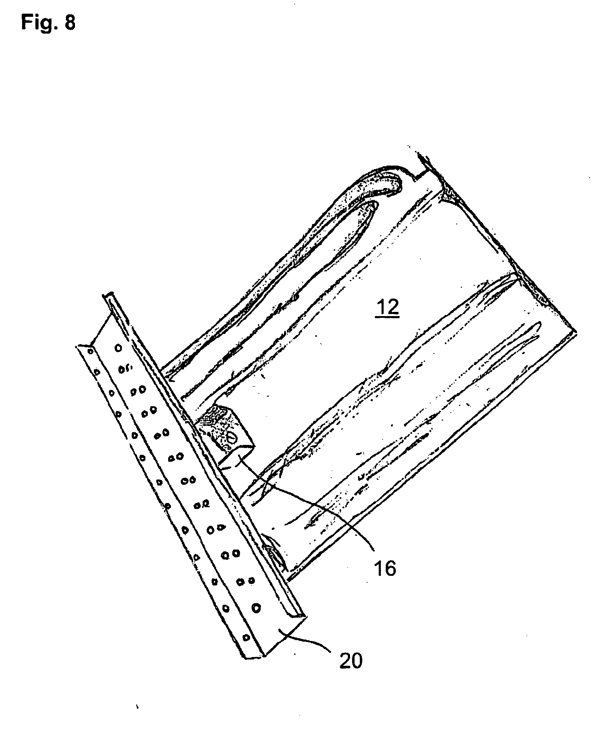

Anhand der Figuren 1 bis 8 wird ein Ausführungsbeispiel einer erfindungsgemäßen Defestigungsanordnung 6 zur Montage von nicht dargestellten Dachzubenörelementen auf geneigten Gebäudedächern illustriert. Die Dachzubehörelemente können insbesondere Solarmodule zur elektrischen Energieerzeugung und/oder zur Brauchwassererwärmung o. dgl. sein. Diese Solarmodule weisen üblicherweise relativ große Flächen auf und können nahezu die gesamte Gebäudedachfläche bedecken. Hieraus wird deutlich, dass insbesondere in schneereichen Regionen in den Wintermonaten erhebliche Schneelasten von den Befestigungsanordnungen aufgenommen und abstützt werden müssen, Weiterhin können nicht unerhebliche Windlasten auf die Befestigungsanordnungen einwirken, die aufgrund einer Unterströmung der flächigen Solarmodule entstehen und zu einer Sogwirkung und einer daraus resultierenden Zugbelastung auf die Befestigungsanordnungen führen können. Auch diese Lasten müssen zuverlässig aufgenommen werden und in die tragende Dachunterkonstruktion eingeleitet werden können, ohne dass es zu unzulässig hohen Belastungen einzelner Konstruktionselemente des Gebäudedachs kommt.

Die schematische Perspektivdarstellung der Fig. 1 verdeutlicht eine erfindungsgemäße Befestigungsanordnung 6 im Gefüge einer Dacheindeckung eines schräg abfallenden Gebäudedaches 8, das mit einer Vielzahl von Dachpfannen 10 gedeckt ist. Die Befestigungsanordnung 6 umfasst ein Dacheindeckungselement 12, das insbesondere aus gestanztem und/oder tiefgezogenem Stahlblech bestehen kann und das einer herkömmlichen Dachpfanne 10 in nahezu beliebiger Gestalt nachempfunden und nachgeformt sein kann, so dass es von weitem nicht von einer benachbarten Dachpfanne 10 aus Ziegelmaterial, Stein oder Beton unterschieden werden kann.

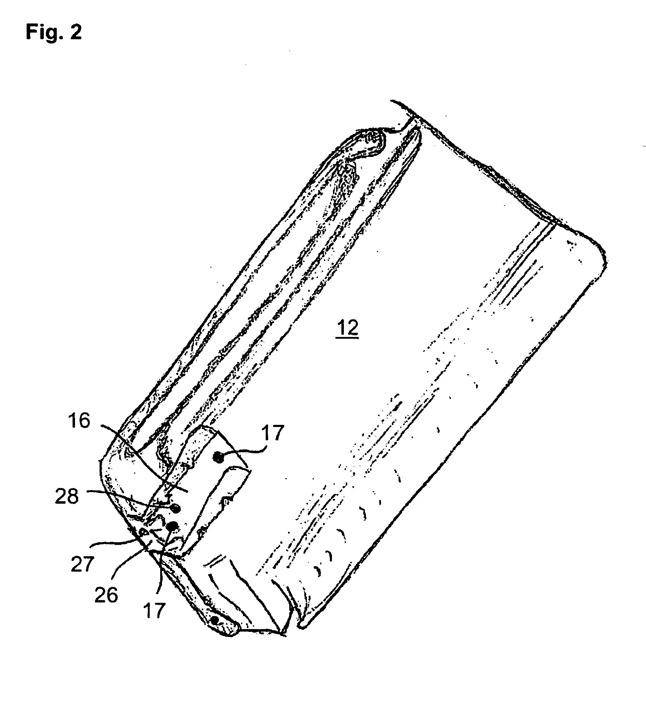

Am Dacheindeckungselement 12 ist ein Montageelement bzw. ein Halteelement 14 verankert, das nach oben ragt und zur Abstützung eines flächigen Solarmoduls o. dgl. dienen kann, wobei die Solarmodule (nicht dargestellt) über regelmäßig angeordnete Halteelemente 14, die auf dem Gebäudedach verteilt sind, gehalten und abgestützt werden. Das hakenförmige Halteelement 14 kann mit dem Dacheindeckungselement 12 insbesondere verschweißt, verklebt, vernietet und/oder verschraubt sein. Vorzugsweise besteht das Halteelement 14 wie auch das Dacheindeckungselement 12 aus gebogenem Metall, bspw. aus verzinktem Stahl oder aus einem Edelstahlstreiten, der in die gewünschte Form gebogen ist. Im gezeigten Ausführungsbeispiel ist das Halteelement 14 mittels zweier Nietverbindungen 17 (vgl. Fig. 2) in Nähe der oberen Kante des Dacheindeckungselements 12 verankert.

Das Dacheindeckungselement 12 liegt mit ihrem oberen Abschnitt auf Trägerbauteilen 18 der Dachunterkonstruktion auf. Diese Trägerbauteile 18 werden durch quer zur First-Traufrichtung des Dachs verlaufende hölzerne Dachlatten 19 sowie durch senkrecht dazu verlaufende und die eigentliche Dachlast aufnehmende Dachsparren 21 gebildet. Die Dachlatte 19 ist mit einer U-förmigen Verstärkungsschiene 20 versehen, die für eine bessere Lastverteilung in die Trägerbauteile 18 und insbesondere in den unter der Dachlatte 18 angeordneten Dachsparren 21 sorgt und dessen Bruchsicherheit bei allen auftretenden Lasten deutlich erhöht. Das Dacheirideckungselement 12 ist so angeordnet, dass das Halteelement 14 annähernd über dem Sparren 21 zu liegen kommt, so dass die dort abzustützenden Lasten in optimaler Weise am Dach abgestützt werden.

Erkennbar sind weiterhin zwei Bohrungen bzw. Durchbrüche 28, die insbesondere zur Montage des Dacheindeckungselementes 12 am Trägerbauleil 18 dienen, insbesondere mittels geeigneter Schraubverbindungen. Am oberen Hakenabschnitt des Halteelementes 14 kann weiterhin ein Durchbruch 15 in Form eines Langlochs vorgesehen sein, das zur Montage von Solarmodulen (nicht dargestellt) dienen kann.

Die schematische Perspektivdarstellung der Fig. 2 zeigt nochmals das Dacheindeckungselement 12 von unten, so dass die Kontur eines an der Unterseite des Dacheindeckungselementes 12 angeordneten Stützelementes 16 verdeutlicht ist, das einen U-förmigen Querschnitt mit hakenförmigern oberem Anlageabschnitt 26 aufweist, so dass eine abstützenden Anlage auf der Verstärkungsschiene 20 erfolgen kann. Durchbrüche 28 dienen zur Verschraubung des Dacheindeckungselements 12 nach erfolgter Auflage, so dass eine sichere Verankerung erfolgen kann, die auch gegen Sogwirkungen durch Windunterströmungen der flächigen Solarmodule wirken kann. Ein weiterer Durchbruch 27 ist am Anlageabschnitt erkennbar, so dass eine zusätzliche Schraubbcfcotigung von oben erfolgen kann.

Das Stützelement 16 ist vorzugsweise über dieselben Befestigungspunkte wie das Halteelement 14 verankert. Erkennbar sind hier zwei Nietverbindungen 17, mittels derer das stützelement 16 sowie das Halteelement 14 am Dacheindeckungselement 12 befestigt ist.

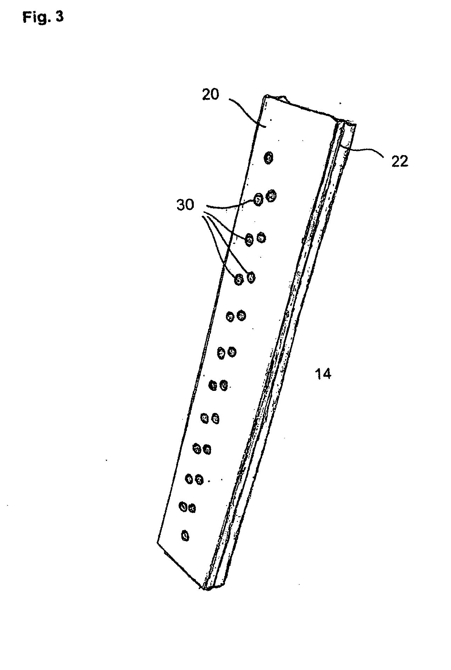

Das Stützelement 16 dient zur abstützenden Auflage des Dacheindeckungselementes 12 am Trägerbauteil 18 der Dachunterkonstruktion (Dachstuhl), wie bereits in Fig. 1 verdeutlicht ist. Da das Trägerbauteil 18 - bspw. eine Dachlatte 19, insbesondere jedoch ein Dachsparren 21 - üblicherweise aus unbehandeltem Holz besteht, kann eine zusätzliche Verstärkungsschiene 20 (vgl. Fig. 3) vorgesehen sein, deren längliche und U-förmige Kontur die einen rechteckförmigen Querschnitt aufweisende Dachlatte 19 auf drei Seiten umschließt und im Zusammenhang mit einer stabilen Verschraubung mit dem Dachsparren für eine Versteifung und bessere Verteilung der auftretenden Stützlasten sorgt.

Das Stutzelement 16 ist so geformt, dass es sich an der Außenseite des oberen Schenkels der Verstärkungsschiene 20 abstützt und auf dem nach oben weisenden Basisabschnitt der U-förmigen Verstärkungsschiene 20 aufliegt. Die Verstärkungsschiene 20 kann wahlweise eine zusätzliche Sicke 22 aufweisen, die zur Versteifung der Verstärkungsschiene 20 und zur Verhinderung von Durchbiegungen aufgrund der Belastungen der montierten Solarmodule sowie der Windlasten dient.

Die schematische Darstellung der Fig. 3 verdeutlicht eine mögliche Ausgestaltung der Verstärkungsschiene 20, die eine Reihe von regelmäßig angeordneten Durchbrüchen 30 aufweist, mit denen die Verstarkungsschiene sowie Später das Dacheindeckungselement 12 auf der Dachlatte 19 aufgesetzt und mit dieser sowie mit dem Dachsparren 21 verschraubt und sicher verankert werden kann. Es sind vorzugsweise mehrere derartiger Durchbrüche 30 in regelmäßigen Abständen zumindest am Basisabschnitt der Verstärkungsschiene 20 vorgesehen, so dass das Dacheindeckungselement 12 In mehreren Montagepositionen aufgelegt und verankert werden kann. Eine exakte Ausrichtung der Verstärkungsschiene 20 kann somit entfallen, was aufgrund der unvermeidlichen Toleranzen hinsichtlich der Positionierung der einzelnen Dachpfannen und Dacheindeckungselemente in der Praxis sehr vorteilhaft ist.

Die Verstärkungsschiene 20 besteht vorzugsweise aus verzinktem und gebogenem Stahlblech, bspw. mit einer Materialstärke von ca. 1 mm oder mehr. Je nach Bedarf kann die Materialstärke auch variiert werden, was in erster Linie von den aufzunehmenden Belastungskräften sowie von den Durchbiegungen der Verstärkungsschiene 20 bei den zulässigen Maximalbelastungen abhängt, In gleicher Weise kann auch das Dacheindeckungselement 12 aus tiefgezogenem und gestanztem Stahlblech bestehen, das anschließend verzinkt und/oder mit einem geeignetem Farbton beschichtet wurde, insbesondere mittels einer Pulverbeschichtung o. dgl.. Auf diese Weise ist das Dacheindeckungselement 12 in optimaler Weise an die umgebenen Dachpfannen 10 angepasst, so dass es nach erfolgter Montage farblich vorzugsweise nicht mehr von diesen unterschieden werden kann.

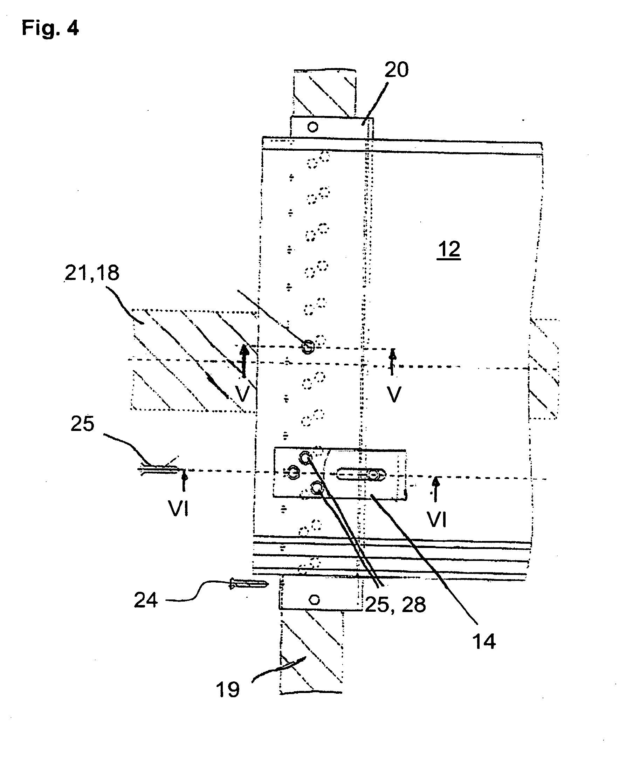

Nach Auflage des Dacheindeckungselementes 12 mit dem Stützelement 16 auf der Verstärkungsschiene 20 erfolgt eine Verschraubung , insbesondere mit einer Senkfräskopfschraube 24 bzw, mit mehreren solcher Senkfräskopfschrauben 24, so dass eine sichere Verankerung und Verspannung des Dacheindeckungselements 12 auf dem Trägerbauteil 18 der Dachunterkonstruktion gewährleistet ist (vgl. Fig. 4).

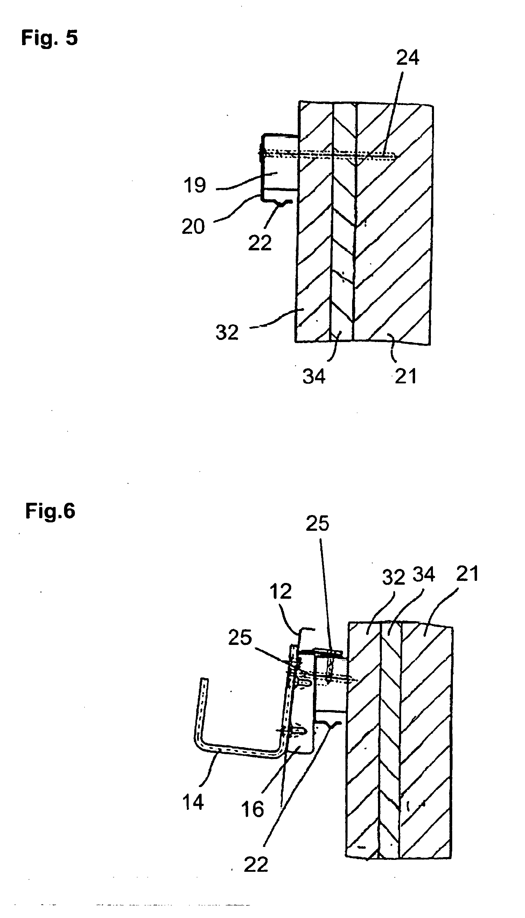

Vor der Montage des Dacheindeckungselementes 12 wird zunächst die Verstärkungsschiene 20 mit dem Dach verschraubt, was in der schematischen Schnittdarstellung der Fig. 5 verdeutlicht ist. Die Verstärkungsschiene 20 wird hierbei auf eine Dachlatte 19 aufgelegt, so dass die Sicke 22 nach unten weist. Anschließend wird wenigstens eine relativ lange Senkfräskopfschraube 24 eingedreht, die vorzugsweise sowohl eine Konterlatte 32, eine darunter liegende Schalung 34 sowie einen unter dieser liegenden Sparren 21 des Dachs durchdringt und so für eine optimale Befestigung der Verstärkungsschiene 20 sorgt. Wichtig für die zuverlässige Lastabstützung ist diese Verankerung der Verstärkungsschiene 20 an dem Sparren 21, da über diese Verbindung die Gewichts- und Windbelastungen, die auf das Dacheindeckungselement 12 einwirken, in die tragende Dachkonstruktion eingeleitet werden.

Anschließend kann das Dacheindeckungselement 12 aufgesetzt werden, wie anhand der schematischen Schnittdarstellung der Fig. 6 verdeutlicht ist. Das Stützelement 18 kann hierbei von oben mittels zusätzlicher Schrauben 2b an der Verstärkungsschiene 20 sowie an der bachi2itte 19 verschraubt sein, Weiterhin ist das Dacheindeckungselement 12 mittels wenigstens zweier Schrauben 25 befestigt, welche die Durchbrüche 28 im Halteelement 14 sowie im Stützelement 16 durchdringen. Wahlweise können die Schrauben 25 einfache Holzschrauben oder Senkfräskopfschrauben sein. Die Verstärkungsschiene 20 stellt dabei letztlich die tragende Verbindung zum Dachsparren 21 dar.

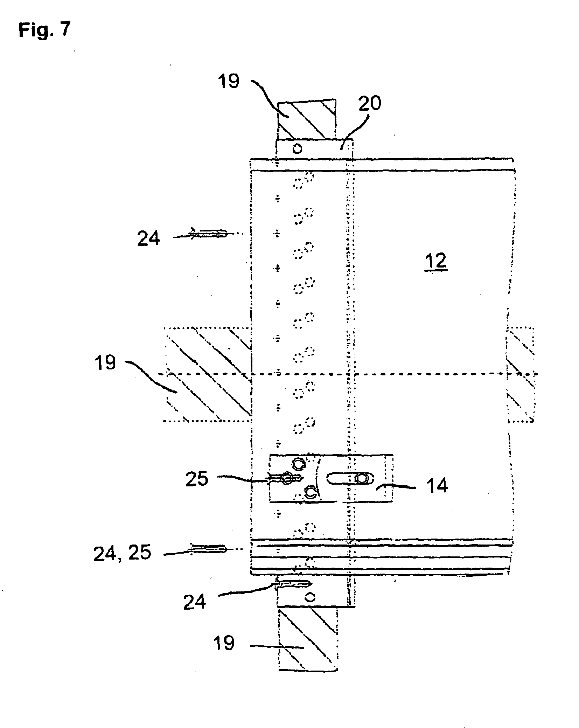

Die schematische Draufsicht der Fig. 7 verdeutlicht nochmals das auf der Verstärkungsschiene 20 aufgesetzte und dort verschraubte Dachelndeckungselement 12.

Die schematische Darstellung der Fg. 8 verdeutlicht das mittels des Stützelementes 16 in gewünschter Positionierung an der Verstärkungsschiene 20 angelegte Dacheindeckungselement 12 von unten.

Neben der in den Figuren 1 bis 8 gezeigten Gestaltung und Dimensionierung des Dacheindeckungselementes 12 kann dieses an nahezu alle in der Praxis verwendeten Varianten, Formen und Größen von Dachpfannen angepasst und diesen angeformt werden, so dass es sich problemlos zur Einfügung in vorhandene Dacheindeckungen eignet.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein. Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezungszeichenliste

- 6: Befestigungsanordnung
- 8: Gebäudedach
- 10: Dachpfanne
- 12: Dacheindeckungselement
- 14: Halteelement / Montageelement
- 15: Durchbruch
- 16: Stützelement
- 17: Nietverbindung
- 18: Trägerbauteil
- 19: Dachlatte
- 20: Verstärkungsschiene
- 21: Dachsparren
- 22: Sicke
- 24: Senkfräskopfschraube
- 25: Schraube
- 26: Anlageabschnitt
- 27: Durchbruch
- 28: Durchbruch
- 30: Durchbruch
- 32: Konterlatte
- 34: Schalung

## Patentansprüche

1. Befestigungsanordnung (6) für die Aufdach-Montage von auf einem geneigten Gebäudedach (8) montierbaren Dachzubehörelementen wie Solarmodule, Solarkollektoren, Fotovoltaikmodule oder sonstige Funktionsteile, umfassend zumindest ein Dacheindeckungselement (12), ein an dessen äußerer Oberfläche befestigtes Montageelement (14) sowie ein an der Unterseite des Dacheindeckungselementes (12) befestigtes Stützelement (16) zur Verbindung mit wenigstens einem Trägerbauteil (18) einer Dachunterkonstruktion, **dadurch gekennzeichnet, dass** die Befestigungsanordnung (6) eine Verstärkungsschiene (20) mit einem L-förmigen oder einem U-förmigen Querschnitt aufweist, die zwischen dem Stützelement (16) des Dacheindeckungselementes (12) und dem Trägerbauteil (18) der Dachunterkonstruktion anordenbar ist, wobei die Verstärkungsschiene (20) mit dem entsprechenden Trägerbauteil (18) der Dachunterkonstruktion, insbesondere mit einer Dachlatte (19) und/oder mit einem Dachsparren (21), verbindbar, insbesondere verschraubbar ist und wobei das Dacheindeckungselement (12) mittels wenigstens einer Holzschraube am hölzernen Trägerbauteil (18) der Dachunterkonstruktion des Gebäudedachs (8) befestigbar ist, wobei die wenigstens eine Schraube das Montageelement (14), das Dacheindeckungselement (12), das Stützelement (16) sowie die Verstärkungsschiene (20) durchdringt und gegen das Trägerbauteil (18) verspannbar macht.

2. Befestigungsanordnung nach Anspruch 1, wobei die Verstärkungsschiene (20) wenigstens eine in Längsrichtung verlaufende Sicke (22) an einem der Schenkel des L-förmigen bzw. U-förmigen Querschnitts aufweist.

3. Befestigungsanordnung nach Anspruch 1 oder Anspruch 2, bei welcher die Verstärkungsschiene (20) eine Mehrzahl von regelmäßig angeordneten Durchbrüchen (15) zur Schraubmontage des Dacheindeckungselementes (12) am Trägerbauteil (18) der Dachunterkonstruktion aufweist.

4. Befestigungsanordnung nach einem der voranstehenden Ansprüche, bei der das Dacheindeckungselement (12) und/oder die Verstärkungsschiene (20) und/oder das Montageelement (14) und/oder das Stützelement (16) jeweils aus Metallblech gefertigt sind.

5. Befestigungsanordnung nach einem der voranstehenden Ansprüche, bei der das Montageelement (14) und das Stützelement (16) jeweils an gegenüber liegenden Seiten der Oberseite bzw. der Unterseite des Dacheindeckungselementes (12) angeordnet und vorzugsweise mittels gemeinsamer Befestigungselemente dort befestigt, insbesondere vernietet, verschraubt und/oder verschweißt sind.

6. Befestigungsanordnung nach einem der voranstehenden Ansprüche, bei der das an der Außenseite des Dacheindeckungselementes (12) angeordnete Montageelement (14) eine hakenförmige Gestalt zur abstützenden Aufnahme von flächigen Solarmodulen bzw. -kollektoren aufweist.

7. Befestigungsanordnung nach einem der voranstehenden Ansprüche, bei der das an der Innenseite des Dacheindeckungselementes (12) angeordnete Stützelement (16) eine stabilisierende Profilierung, insbesondere einen U-förmigen Querschnitt sowie einen hakenförmigen Abschnitt zur abstützenden Anlage am Trägerbauteil (18) der Dachunterkonstruktion bzw. an der Verstärkungsschiene (20) aufweist.

8. Befestigungsanordnung nach einem der voranstehenden Ansprüche, wobei die wenigstens eine Holzschraube eine Senkfräskopfschraube (24) ist.

9. Befestigungsanordnung nach einem der voranstehenden Ansprüche, bei der das Dacheindeckungselement (12) eine die Kontur der umgebenden Dacheindeckungselemente bzw. Dachpfannen (10) aus Ziegeln, Beton oder anderen Baustoffen nachempfindende Kontur und/oder Oberflächengestaltung und/oder Farbgebung aufweist.

10. Befestigungssystem für die Aufdach-Montage wenigstens eines Dachzubehörelementes wie eines Solarmoduls o. dgl., das eine Mehrzahl gleichartiger Befestigungsanordnungen (6) gemäß einem der Ansprüche 1 bis 9 umfasst.

## Claims

1. A fastening arrangement (6) for the rooftop installation of roof accessory elements, which are mountable on an inclined building roof (8), such as solar modules, solar collectors, photovoltaic modules, or other functional parts, comprising at least one roofing element (12), one mounting element (14) fastened at the outer surface of the roofing element (12) and, fastened at its underside, a support element (16) for the connection with at least one carrier component (18) of a roof substructure, **characterised in that** the fastening arrangement (6) has a reinforcing rail (20) with an L-shaped or a U-shaped profile, which reinforcing rail (20) is arrangeable between the support element (16) of the roofing element (12) and the carrier component (18) of the roof substructure, wherein the reinforcing rail (20) is connectable, in particular screwable, to the corresponding carrier component (18) of the roof substructure, in particular to a roof batten (19) and/or to a roof rafter (21), and wherein the roofing element (12) is fastenable at the wooden carrier component (18) of the roof substructure of the building roof (8) by means of at least one wood screw, wherein the at least one screw penetrates the mounting element (14), the roofing element (12), the support element (16) as well as the reinforcing rail (20) and makes them tensionable against the carrier component (18).

2. The fastening arrangement as recited in claim 1 wherein the reinforcing rail (20) has at least one roof seam (22) running in longitudinal direction at one of the legs of the L-shaped or the U-shaped profile, as the case may be.

3. The fastening arrangement as recited in claim 1 or claim 2, in which the reinforcing rail (20) has a plurality of regularly arranged openings (15) for screw mounting the roofing element (12) at the carrier component (18) of the roof substructure.

4. The fastening arrangement as recited in one of the previous claims, in which the roofing element (12) and/or the reinforcing rail (20) and/or the mounting element (14) and/or the support element (16) are respectively produced from sheet metal.

5. The fastening arrangement as recited in one of the previous claims, in which the mounting element (14) and the support element (16) are respectively arranged at opposite sides of the upper side or of the underside of the roofing element (12), as the case may be, and preferably fastened, in particular riveted, screwed, and/or welded there by means of common fastening elements.

6. The fastening arrangement as recited in one of the previous claims, in which the mounting element (14) arranged at the outer side of the roofing element (12) has a hook-shaped form for the supporting reception of planar solar modules or solar collectors, as the case may be.

7. The fastening arrangement as recited in one of the previous claims, in which the support element (16) arranged at the inner side of the roofing element (12) has a stabilizing profile, in particular a U-shaped profile and also a hook-shaped section for the supporting abutment on the carrier component (18) of the roof substructure or on the reinforcing rail (20), as the case may be.

8. The fastening arrangement as recited in one of the previous claims wherein the at least one wood screw is a screw with a countersunk milling head (24).

9. The fastening arrangement as recited in one of the previous claims, in which the roofing element (12) has a contour and/or surface design and/or colouring emulating the contour of the surrounding roofing elements or roof tiles (10) made of brick, concrete, or other building materials.

10. A fastening system for the rooftop installation of at least one roof accessory element, such as a solar module or the like, comprising a plurality of fastening arrangements (6) of the same type according to one of the claims 1 to 9.

## Revendications

1. Ensemble de fixation (6) pour le montage sur toit d'accessoires de toit aptes à être montés sur un toit de bâtiment (8) en pente, tels que modules solaires, capteurs solaires, modules photovoltaïques ou autres parties fonctionnelles, comprenant au moins un élément de couverture (12), un élément de montage (14) fixé sur la surface extérieure de celui-ci ainsi qu'un élément d'appui (16) fixé à la face inférieure dudit élément de couverture (12) et destiné à être relié à au moins un composant support (18) d'une sous-construction de toit, **caractérisé par le fait que** ledit ensemble de fixation (6) présente un rail de renforcement (20) ayant une section en L ou en U qui peut être disposé entre ledit élément d'appui (16) de l'élément de couverture (12) et ledit composant support (18) de la sous-construction de toit, dans lequel ledit rail de renforcement (20) peut être relié à, en particulier vissé sur, le composant support (18) correspondant de la sous-construction de toit, en particulier une volige (19) et/ou un chevron (21), et dans lequel ledit élément de couverture (12) peut être fixé au moyen d'au moins une vis à bois sur le composant support (18) en bois de la sous-construction de toit du toit de bâtiment (8), ladite au moins une vis pénétrant ledit élément de montage (14), ledit élément de couverture (12), ledit élément d'appui (16) ainsi que le rail de renforcement (20) et rend ceux-ci aptes à être serrés contre ledit composant support (18).

2. Ensemble de fixation selon la revendication 1, dans lequel ledit rail de renforcement (20) présente au moins une moulure (22) sur l'une des branches de la section en L ou bien en U, qui s'étend dans la direction longitudinale.

3. Ensemble de fixation selon la revendication 1 ou la revendication 2, dans lequel ledit rail de renforcement (20) présente une pluralité de percées (15) disposées régulièrement et destinées au montage par vissage de l'élément de couverture (12) sur le composant support (18) de la sous-construction de toit.

4. Ensemble de fixation selon l'une quelconque des revendications précédentes, dans lequel ledit élément de couverture (12) et/ou ledit rail de renforcement (20) et/ou ledit élément de montage (14) et/ou ledit élément d'appui (16) sont réalisés chacun en tôle métallique.

5. Ensemble de fixation selon l'une quelconque des revendications précédentes, dans lequel ledit élément de montage (14) et ledit élément d'appui (16) sont disposés chacun sur des côtés opposés de la face supérieure ou bien de la face inférieure de l'élément de couverture (12) et y sont fixés de préférence au moyen d'éléments communs de fixation, en particulier rivetés, vissés et/ou soudés.

6. Ensemble de fixation selon l'une quelconque des revendications précédentes, dans lequel l'élément de montage (14) disposé sur la face extérieure de l'élément de couverture (12) présente une configuration en forme de crochet pour recevoir des modules ou bien capteurs solaires plans en les appuyant.

7. Ensemble de fixation selon l'une quelconque des revendications précédentes, dans lequel l'élément d'appui (16) disposé sur la face intérieure de l'élément de couverture (12) présente un profilage stabilisant, en particulier une section en U ainsi qu'une section en forme de crochet pour un appui appuyant sur ledit composant support (18) de la sous-construction de toit ou bien sur le rail de renforcement (20).

8. Ensemble de fixation selon l'une quelconque des revendications précédentes, dans lequel ladite au moins une vis à bois est une vis à tête fraisée (24).

9. Ensemble de fixation selon l'une quelconque des revendications précédentes, dans lequel ledit élément de couverture (12) présente un contour et/ou une conformation de surface et/ou une coloration imitant le contour des éléments de couverture ou bien tuiles flamandes (10) en tuiles, béton ou autres matériaux de construction, qui sont disposés autour.

10. Système de fixation pour le montage sur toit d'au moins un accessoire de toit, tel qu'un module solaire ou similaire, qui comprend une pluralité d'ensembles de fixation (6) similaires selon l'une quelconque des revendications 1 à 9.
